# EUROPÄISCHE PATENTSCHRIFT

(11) **EP 3 551 901 B1**
(45) Veröffentlichungstag und Bekanntmachung des Hinweises auf die Patenterteilung: **04.11.2020**
(21) Anmeldenummer: 17832203.8
(22) Anmeldetag: 11.12.2017
(51) Int. Cl.: F16D 13/68

(54) **LAMELLENTRÄGER**
DISC CARRIER
SUPPORT DE LAMELLES

(30) Priorität: 09.12.2016 DE 202016106877 U
(43) Veröffentlichungstag der Anmeldung: 16.10.2019
(73) Patentinhaber: Bischopink, Hugo, 57413 Finnentrop (DE)
(72) Erfinder: Bischopink, Hugo, 57413 Finnentrop (DE)
(74) Vertreter: Wunderlich & Heim Patentanwälte Partnerschaftsgesellschaft mbB
(86) Internationale Anmeldenummer: PCT/EP2017/082163
(87) Internationale Veröffentlichungsnummer: WO 2018/104548

(56) Entgegenhaltungen:
- EP-A2- 1 936 220
- CH-A- 191 909
- DE-A1-102010 011 809
- DE-A1-102016 202 984

## Beschreibung

Die Erfindung betrifft ein Verfahren zum Herstellen eines Lamellenträgers mit einer zylindrischen Umfangswand, welche einen ersten Umfangswandabschnitt mit einem ersten Durchmesser und einen axial sich daran anschließenden zweiten Umfangsabschnitt mit einem zweiten Durchmesser aufweist, wobei der zweite Durchmesser größer als der erste Durchmesser ist und der erste Umfangsabschnitt und der zweite Umfangsabschnitt über einen radialen ringförmigen Absatz miteinander verbunden sind, stegartigen axialen Lamellen, welche an einer Innenseite des ersten Umfangsabschnitts und/oder des zweiten Umfangsabschnitts angeformt sind, und einer ringförmigen Nut, welche an einer Innenseite des ringförmigen Absatzes und zwischen dem zweiten Umfangsabschnitt und einer radial innen liegenden, axial vorstehenden Nutwand ausgebildet ist, welche radiale Durchbrüche aufweist, gemäß dem Oberbegriff des Anspruchs 1.

Ein gattungsgemäßes Verfahren geht aus der EP 1936 220 A2 hervor.

Lamellenträger, auch Kupplungslamellenträger genannt, sind ein Bauteil, welches in Kupplungen von Fahrzeuggetrieben zum Einsatz kommt. Lamellenträger sind im Wesentlichen topfförmig gestaltet und weisen einen radial verlaufenden Nabenbereich und einen axial verlaufenden zylindrischen Umfangswandbereich auf. Entlang der Innenseite der Umfangswand sind axial verlaufende Stege angeordnet, welche als Lamellen bezeichnet werden und zum Halten und Führen von Kupplungsscheiben dienen.

Insbesondere für Doppelkupplungsgetriebe sind Lamellenträger mit einer zylindrischen Umfangswand bekannt, welche einen ersten Umfangswandabschnitt mit einem ersten Durchmesser und einen axial sich daran anschließenden zweiten Umfangsabschnitt mit einem zweiten größeren Durchmesser aufweisen. Es ist bekannt, derartige Lamellenträger aus zwei oder mehreren Komponenten zu schweißen.

Schweißverbindungen sind fertigungstechnisch aufwändig.

Weiter ist es bekannt, einfache Lamellenträger durch Drückwalzen aus einem Ausgangswerkstück herzustellen. Bei Lamellenträgern mit zwei zueinander versetzten Umfangsabschnitten der Umfangswand besteht aber das Problem, dass in einem radialen Absatzbereich zum Fördern von Öl zwischen den beiden Umfangsabschnitten eine ringförmige Nut vorzusehen ist. Die ringförmige Nut ist dabei zwischen dem zweiten Umfangswandabschnitt und einer radial innen liegenden, axial vorstehenden, ringförmigen Nutwand ausgebildet. Diese Nutwand ist mit radialen Durchbrüchen versehen, um einen Ölfluss in gewünschter Weise zu fördern.

Bei einem Formen des Lamellenträgers durch Drückwalzen kann dieser speziell geformte radiale Absatzbereich nicht oder zumindest nicht präzise in der gewünschten Weise ausgeformt werden. Es ist daher bekannt, bei derartigen Lamellenträgern eine spanabhebende Nachbearbeitung zum Ausbilden der ringförmigen Nut und der Nutwand mit den radialen Durchbrüchen vorzusehen. Eine derartige spanabhebende Nachbearbeitung in dem topfförmigen Lamellenträger ist jedoch fertigungstechnisch aufwändig und kann auch nur in einem begrenzten Umfang durchgeführt werden.

Der Erfindung liegt die **Aufgabe** zugrunde, ein Verfahren anzugeben, mit welchem ein Lamellenträger einfach und formgenau herstellbar ist.

Die Aufgabe wird nach der Erfindung durch ein Verfahren mit den Merkmalen des Anspruchs 1 gelöst. Bevorzugte Ausführungsformen sind in den abhängigen Ansprüchen angegeben.

Es ist vorgesehen, dass der Lamellenträger durch Abstreckdrückwalzen der Umfangswand mit dem ersten Umfangsabschnitt, dem zweiten Umfangsabschnitt und den axialen Lamellen aus einem Ausgangswerkstück einstückig geformt wird, bei dem der ringförmige Absatz mit der ringförmigen Nut und der Nutwand mit den radialen Durchbrüchen vor dem Abstreckdrückwalzen ausgebildet ist.

Eine Grundidee der Erfindung liegt darin, den Lamellenträger einstückig durch ein Abstreckdrückwalzen aus einem Ausgangswerkzeug herzustellen, bei dem der ringförmige Absatzbereich mit der Nutwand und den Durchbrüchen bereits vorgeformt und/oder fertiggeformt ist. Dabei hat das Ausgangswerkstück ebenfalls einen ersten Umfangsabschnitt und einen zweiten Umfangsabschnitt, welche jedoch axial kleiner aber von der Wanddicke stärker als die Umfangsabschnitte des fertigen Lamellenträgers sind.

Dabei beruht die Erfindung auf der Erkenntnis, dass dieser vorgeformte radiale Bereich sich beim Abstreckdrückwalzen der Umfangsabschnitte nicht, jedenfalls nicht wesentlich verformt. So kann ein Lamellenträger hergestellt werden, welcher in seinen Umfangsabschnitten eine durch das Abstreckdrückwalzen kalt verfestigte Gefügestruktur besitzt, während im Bereich des ringförmigen Absatzes die Gefügestruktur des Ausgangswerkstückes kaum verändert ist.

Es kann so ein Lamellenträger hergestellt werden, welcher einen präzise gefertigten ringförmigen Absatzbereich aufweist und gleichwohl effizient durch Drückwalzen oder Abstreckdrückwalzen einstückig hergestellt ist.

Grundsätzlich kann das Ausgangswerkstück beliebig hergestellt sein, etwa durch Gießen, Umformen oder spanabhebendes Bearbeiten. Besonders vorteilhaft ist es nach einer Ausführungsvariante der Erfindung, dass das Ausgangswerkstück ein Schmiedewerkstück ist. Hierdurch kann das gesamte Werkstück besonders effizient und mit hoher Festigkeit hergestellt werden.

Eine weitere bevorzugte Ausführungsform der Erfindung besteht darin, dass der ringförmige Absatz mit der ringförmigen Nut und der Nutwand mit den radialen Durchbrüchen spanabhebend gebildet ist. So kann das Ausgangswerkstück mit einer relativ geringen axialen Länge etwa mittels einer Drehmaschine oder einer Fräsmaschine effizient und hochpräzise bearbeitet werden. Insbesondere können so die ringförmige Nut und die radialen Durchbrüche effizient erzeugt werden.

Gemäß einer Weiterbildung der Erfindung ist es vorteilhaft, dass die axialen Lamellen an dem ersten Umfangsabschnitt und/oder dem zweiten Umfangsabschnitt gleichmäßig verteilt über den Umfang angeordnet sind und sich zumindest entlang eines axialen Teilabschnitts der Umfangswand erstrecken. Vorzugsweise erstrecken sich die axialen Lamellen, welche auch als Stege bezeichnet werden können, im Wesentlichen über die gesamte axiale Länge des ersten und/oder zweiten Umfangsabschnitts. Die Lamellen können beim Abstreckdrückwalzen ausgeformt werden, bei dem das Material in eine entsprechende Konturierung an einem Drückfutter eingeformt wird.

Eine weitere vorteilhafte Ausführungsform der Erfindung besteht darin, dass sich die axialen Lamellen an dem zweiten Umfangsabschnitt axial von dem ringförmigen Absatz bis zu einem freien Ende der Umfangswand erstrecken. Somit kann der zweite Umfangsabschnitt in seiner gesamten axialen Länge etwa zum Halten und Führen von Kupplungsscheiben genutzt werden.

Grundsätzlich kann die Umfangswand des topfförmigen Lamellenträgers geschlossen ausgebildet sein. Für bestimmte Funktionsweisen ist es nach einer Ausführungsvariante der Erfindung vorteilhaft, dass in der Umfangswand Öffnungen eingebracht sind. Die Öffnungen können nach dem Drückwalzen durch eine entsprechende materialabtragende Bearbeitung eingebracht werden.

Für ein effizientes Verbinden des Lamellenträgers mit einer Antriebswelle ist es nach einer Weiterbildung der Erfindung vorgesehen, dass an dem radialen Nabenbereich eine hülsenförmige Nabe angeordnet ist. Die Nabe kann dabei vorzugsweise mit einem Keilnutprofil versehen sein, um eine formschlüssige Welle-Nabe-Verbindung zu erzeugen.

Die Erfindung umfasst ein Verfahren zur Herstellung eines Lamellenträgers mit einer zylindrischen Umfangswand, welche einen ersten Umfangswandabschnitt mit einem ersten Durchmesser und einen axial sich daran anschließenden zweiten Umfangsabschnitt mit einem zweiten Durchmesser aufweist, wobei der zweite Durchmesser größer als der erste Durchmesser ist und der erste Umfangsabschnitt und der zweite Umfangsabschnitt über einen radialen ringförmigen Absatz miteinander verbunden sind, stegartigen axialen Lamellen, welche an einer Innenseite des ersten Umfangsabschnitts und/oder des zweiten Umfangsabschnitts angeformt werden und einer ringförmigen Nut, welche an einer Innenseite des ringförmigen Absatzes und zwischen dem zweiten Umfangsabschnitt und einer radial innenliegenden, axial vorstehenden Nutwand ausgebildet wird, welche radiale Durchbrüche aufweist, wobei vorgesehen ist, dass der Lamellenträger durch Abstreckdrückwalzen einer Umfangswand mit dem ersten Umfangsabschnitt, dem zweiten Umfangsabschnitt und den axialen Lamellen aus einem Ausgangswerkstück einstückig geformt wird, bei dem der ringförmige Absatz mit der ringförmigen Nut und der Nutwand mit den radialen Durchbrüchen vor dem Abstreckdrückwalzen ausgebildet werden.

Das Verfahren dient vorzugsweise zur Herstellung des zuvor beschriebenen Lamellenträgers und seiner beschriebenen Ausführungsvarianten.

Die Erfindung wird nachfolgend anhand von bevorzugten Ausführungsbeispielen weiter beschrieben, welche schematisch in den Zeichnungen gezeigt sind. In den Zeichnungen zeigen:
- Fig. 1: eine Teilquerschnittsansicht eines erfindungsgemäß hergestellten Lammellenträgers;
- Fig. 2: eine Vorderansicht des Lamellenträgers von Fig. 1 in einem verkleinerten Maßstab;
- Fig. 3: eine Detail-Querschnittsansicht zu dem Lamellenträger von Fig. 1;
- Fig. 4: eine perspektivische Ansicht eines Ausgangswerkstücks; und
- Fig. 5: eine weitere perspektivische Ansicht des Ausgangswerkstücks von Fig. 4.

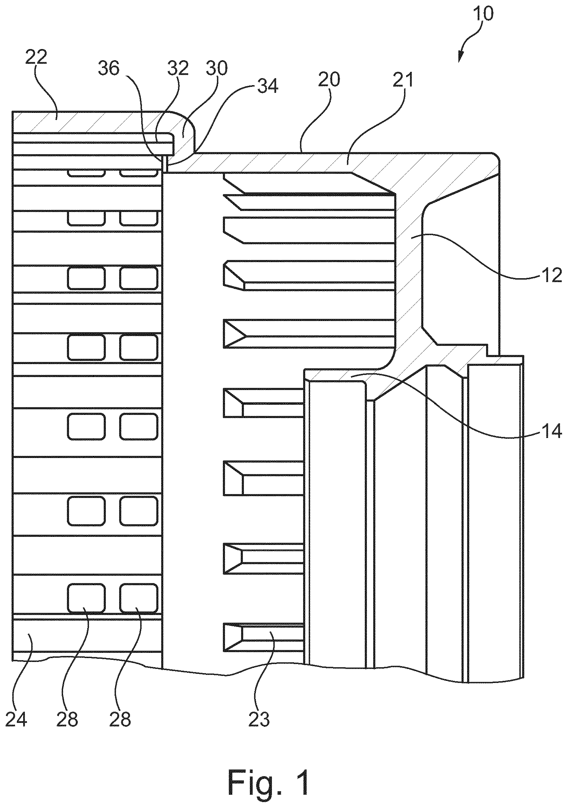

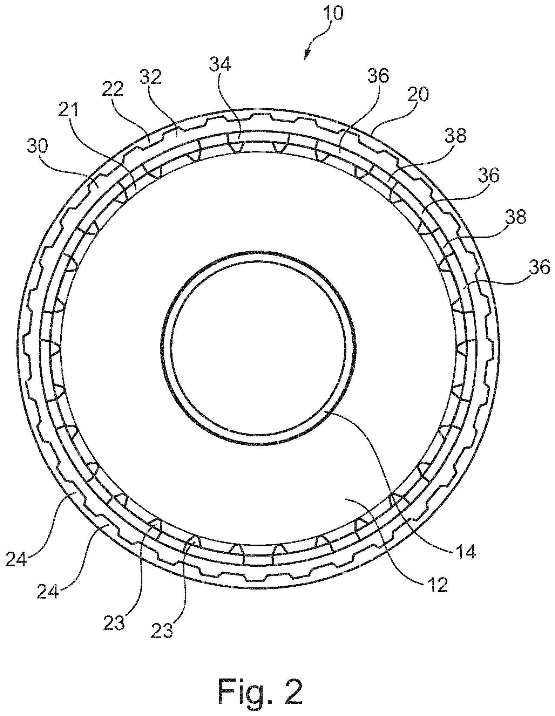

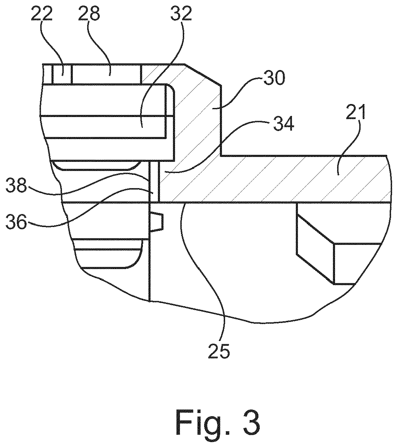

Der Aufbau eines erfindungsgemäß hergestellten Lamellenträgers 10 wird im Zusammenhang mit den Figuren 1 bis 3 beschrieben. Der topfförmige Lamellenträger 10 weist eine gestufte zylindrische Umfangswand 20 und einen scheibenförmigen Nabenbereich 12 auf, in dessen Mittenbereich eine hülsenförmige Nabe 14 ausgebildet ist. Die Umfangswand 20 umfasst einen ersten Umfangsabschnitt 21 mit einem ersten Durchmesser und einen zweiten Umfangsabschnitt 22 mit einem zweiten Durchmesser. Der zweite Durchmesser des zweiten Umfangsabschnitts 22 ist größer als der erste Durchmesser des ersten Umfangsabschnitts 21.

Über einen ringförmigen Absatz 30 ist der zweite Umfangsabschnitt 22 mit dem ersten Umfangsabschnitt 21 verbunden. An einer zylindrischen Innenseite des ersten Umfangsabschnitts 21 sind radial nach innen vorstehende, stegartige erste Lamellen 23 ausgebildet. In ähnlicher Weise sind an der Innenseite des zweiten Umfangsabschnitts 22 stegförmige zweite Lamellen 24 ausgebildet, welche sich von dem ringförmigen Absatz 30 bis zu einem freien Ende der Umfangswand 20 erstrecken. Zwischen den zweiten Lamellen 24 des zweiten Umfangsabschnitts 22 sind jeweils zwei Öffnungen 28 in jedem Zwischenraum ausgebildet.

An einer Innenseite des ringförmigen Absatzes 30 ist zwischen dem zweiten Umfangsabschnitt 22 und einer radial innen angeordneten ringförmigen Nutwand 34 eine ringförmige Nut 32 ausgebildet. In die Nutwand 34 sind in regelmäßigen Abständen Ausnehmungen oder Durchbrüche 34 eingebracht, wobei dazwischenliegende axiale Vorsprünge 38 ausgebildet sind. Die axialen Vorsprünge 38 dienen als eine axiale Anschlagfläche für Kupplungsscheiben, welche innerhalb des zweiten Umfangsabschnitts 22 angeordnet werden können. Über die ringförmige Nut 32 und die Durchbrüche 36 können im Betrieb des Lamellenträgers 10 in einer Kupplung Schmiermittel und/oder Luft zwischen den beiden Bereichen an dem ersten Umfangsabschnitt 21 und dem zweiten Umfangsabschnitt 22 ausgetauscht werden. Eine Innenseite 25 des ersten Umfangsabschnitts 21 geht fließend in eine Innenseite an der ringförmigen Nutwand 34 über.

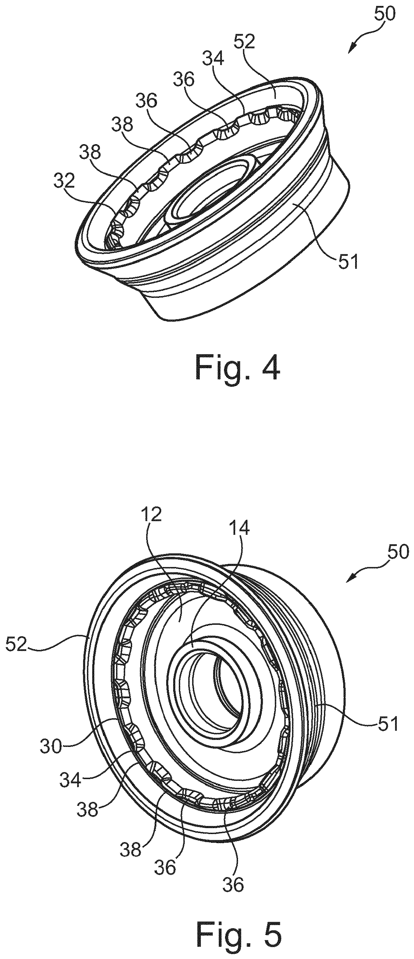

Der Lamellenträger 10 wird aus einem Ausgangswerkstück 50 gefertigt, welches vorzugsweise als ein Schmiedeteil gebildet ist und anschaulich in den Figuren 4 und 5 dargestellt ist. Das rotationsymmetrische Ausgangswerkstück 50 weist einen Nabenbereich 12 mit einer hülsenförmigen Nabe 14 auf, welche vorzugsweise entsprechend dem Nabenbereich 12 und der Nabe 14 des fertigen Lamellenträgers 10 geformt sind.

An dem hülsenförmigen Ausgangswerkstück 50 ist eine Umfangswand mit einem ersten Wandbereich 51 und einem sich daran anschließenden zweiten Wandbereich 52 angeordnet. Die Wandstärken der beiden Wandbereiche 51, 52 des Ausgangswerkstücks 50 sind dabei dicker als die Wandstärken des ersten und zweiten Umfangsabschnitts 21, 22 des fertigen Lamellenträgers 10. Die beiden Wandbereiche 51, 52 werden durch Abstreckdrückwalzen verdünnt und gelängt sowie zu dem ersten Umfangsabschnitt 21 beziehungsweise dem zweiten Umfangsabschnitt 22 endgeformt.

An dem Ausgangswerkstück 50 ist zwischen dem ersten Wandbereich 51 und dem zweiten Wandbereich 52 der radiale Absatz 30 mit der ringförmigen Nut 32 und der Nutwand 34 ausgebildet. An der Nutwand 34 sind in entsprechender Weise die Durchbrüche 36 und die Vorsprünge 38 ausgebildet. Die endgültige Formgebung der Nutwand 34 kann unmittelbar bei einem Schmieden oder vorzugsweise durch eine spanabhebende Bearbeitung erfolgen, welche dem Abstreckdrückwalzen vorgeschaltet ist.

## Patentansprüche

1. Verfahren zum Herstellen eines Lamellenträgers mit
- einer zylindrischen Umfangswand (20), welche einen ersten Umfangsabschnitt (21) mit einem ersten Durchmesser und einen axial sich daran anschließenden zweiten Umfangsabschnitt (22) mit einem zweiten Durchmesser aufweist, wobei der zweite Durchmesser größer als der erste Durchmesser ist und der erste Umfangsabschnitt (21) und der zweite Umfangsabschnitt über einen radialen ringförmigen Absatz (30) miteinander verbunden sind,
- stegartigen axialen Lamellen (23, 24), welche an einer Innenseite des ersten Umfangsabschnitts (21) und/oder des zweiten Umfangabschnitts (22) angeformt sind, und
- einer ringförmigen Nut (32), welche an einer Innenseite des ringförmigen Absatzes (30) und zwischen dem zweiten Umfangsabschnitt (22) und einer radial innenliegenden, axial vorstehenden Nutwand (34) ausgebildet ist, welche radiale Durchbrüche (36) aufweist,
**dadurch gekennzeichnet,**
- **dass** der Lamellenträger (10) durch Abstreckdrückwalzen der Umfangswand (20) mit dem ersten Umfangsabschnitt (21), dem zweiten Umfangsabschnitt (22) und den axialen Lamellen (23,24) aus einem Ausgangswerkstück (50) einstückig geformt wird, und
- **dass** vor dem Abstreckdrückwalzen der ringförmige Absatz (30) mit der ringförmigen Nut (32) und der Nutwand (34) mit den radialen Durchbrüchen (36) vorgeformt oder fertig geformt wird.

2. Verfahren nach Anspruch 1,
**dadurch gekennzeichnet,**
**dass** das Ausgangswerkstück (50) ein Schmiedewerkstück ist.

3. Verfahren nach Anspruch 1 oder 2,
**dadurch gekennzeichnet,**
**dass** der ringförmige Absatz (30) mit der ringförmigen Nut (32) und der Nutwand (34) mit den radialen Durchbrüchen (36) spanabhebend ausgebildet werden.

4. Verfahren nach einem der Ansprüche 1 bis 3,
**dadurch gekennzeichnet,**
**dass** die axialen Lamellen (23,24) an dem ersten Umfangsabschnitt (21) und/oder dem zweiten Umfangsabschnitt (22) gleichmäßig verteilt über den Umfang angeordnet werden und sich zumindest entlang eines axialen Teilabschnitts der Umfangswand (20) erstrecken.

5. Verfahren nach einem der Ansprüche 1 bis 4,
**dadurch gekennzeichnet,**
**dass** sich die axialen Lamellen (24) an dem zweiten Umfangsabschnitt (22) axial von dem ringförmigen Absatz (30) bis zu einem freien Ende der Umfangswand (20) erstrecken.

6. Verfahren nach einem der Ansprüche 1 bis 5,
**dadurch gekennzeichnet,**
**dass** in der Umfangswand (20) Öffnungen (28) eingebracht werden.

7. Verfahren nach einem der Ansprüche 1 bis 6,
**dadurch gekennzeichnet,**
**dass** an dem radialen Nabenbereich (12) eine hülsenförmige Nabe (14) angeordnet wird.

## Claims

1. Method for producing a disk carrier having
- a cylindrical circumferential wall (20) which has a first circumferential section (21) with a first diameter and an axially adjoining second circumferential section (22) with a second diameter, wherein the second diameter is larger than the first diameter and the first circumferential section (21) and the second circumferential section are connected to each other via a radial annular step (30),
- rib-like axial disks (23, 24) which are formed on an internal side of the first circumferential section (21) and/or the second circumferential section (22), and
- an annular groove (32) which is designed on an internal side of the annular step (30) and between the second circumferential section (22) and a radially internal, axially protruding groove wall (34) which has radial apertures (36),
**characterized in that**
- through stretch-flow forming of the circumferential wall (20) with the first circumferential section (21), the second circumferential section (22) and the axial disks (23, 24) the disk carrier (10) is formed integrally from a basic workpiece (50), and
- **in that** prior to stretch-flow forming the annular step (30) with the annular groove (32) and the groove wall (34) with the radial apertures (36) is preformed or finish-formed.

2. Method according to claim 1,
**characterized in that**
the basic workpiece (50) is a forged workpiece.

3. Method according to claim 1 or 2,
**characterized in that**
the annular step (30) with the annular groove (32) and the groove wall (34) with the radial apertures (36) are designed in a chip-removing manner.

4. Method according to any one of claims 1 to 3,
**characterized in that**
the axial disks (23, 24) on the first circumferential section (21) and/or the second circumferential section (22) are arranged evenly distributed over the circumference and extend at least along an axial partial section of the circumferential wall (20).

5. Method according to any one of claims 1 to 4,
**characterized in that**
the axial disks (24) on the second circumferential section (22) extend axially from the annular step (30) up to a free end of the circumferential wall (20).

6. Method according to any one of claims 1 to 5,
**characterized in that**
in the circumferential wall (20) openings (28) are introduced.

7. Method according to any one of claims 1 to 6,
**characterized in that**
on the radial hub region (12) a sleeve-shaped hub (14) is arranged.

## Revendications

1. Procédé de fabrication d'un support de lamelles comportant
- une paroi périphérique (20) cylindrique, laquelle présente une première section périphérique (21) avec un premier diamètre et une deuxième section périphérique (22) s'y raccordant axialement avec un deuxième diamètre, dans lequel le deuxième diamètre est supérieur au premier diamètre et la première section périphérique (21) et la deuxième section périphérique sont reliées l'une à l'autre par l'intermédiaire d'un palier (30) de forme annulaire radial,
- des lamelles (23, 24) axiales de type nervure, lesquelles sont formées au niveau d'un côté intérieur de la première section périphérique (21) et/ou de la deuxième section périphérique (22), et
- une rainure (32) de forme annulaire, laquelle est réalisée au niveau d'un côté intérieur du palier (30) de forme annulaire et entre la deuxième section périphérique (22) et une paroi de rainure (34) située à l'intérieur radialement, faisant saillie axialement, laquelle présente des ajours (36) radiaux,
**caractérisé en ce que**
- le support de lamelles (10) est formé d'un seul tenant à partir d'une pièce de départ (50) par fluotournage de la paroi périphérique (20) avec la première section périphérique (21), la deuxième section périphérique (22) et les lamelles axiales (23, 24), et
- **en ce qu'**avant le fluotournage, le palier (30) de forme annulaire avec la rainure (32) de forme annulaire et la paroi de rainure (34) est formé au préalable ou de manière finalisée avec les ajours (36) radiaux.

2. Procédé selon la revendication 1,
**caractérisé en ce que**
la pièce de départ (50) est une pièce forgée.

3. Procédé selon la revendication 1 ou 2,
**caractérisé en ce que**
le palier (30) de forme annulaire avec la rainure (32) de forme annulaire et la paroi de rainure (34) est réalisé par enlèvement de copeaux avec les ajours (36) radiaux.

4. Procédé selon l'une quelconque des revendications 1 à 3,
**caractérisé en ce que**
les lamelles (23, 24) axiales sont disposées selon une répartition homogène sur la périphérie au niveau de la première section périphérique (21) et/ou de la deuxième section périphérique (22) et s'étendent au moins le long d'une section partielle axiale de la paroi périphérique (20).

5. Procédé selon l'une quelconque des revendications 1 à 4,
**caractérisé en ce que**
les lamelles (24) axiales s'étendent au niveau de la deuxième section périphérique (22) de manière axiale depuis le palier (30) de forme annulaire jusqu'à une extrémité libre de la paroi périphérique (20).

6. Procédé selon l'une quelconque des revendications 1 à 5,
**caractérisé en ce que**
des ouvertures (28) sont pratiquées dans la paroi périphérique (20).

7. Procédé selon l'une quelconque des revendications 1 à 6,
**caractérisé en ce**
**qu'**un moyeu (14) en forme de manchon est disposé au niveau de la zone de moyeu (12) radiale.
